# FASCICULE DE BREVET EUROPEEN

(11) **EP 3 825 236 B1**
(45) Date de publication et mention de la délivrance du brevet: **10.09.2025**
(21) Numéro de dépôt: 20205221.3
(22) Date de dépôt: 02.11.2020
(51) Int. Cl.: B64F 5/10, B64C 3/26, B64C 3/28, B64C 3/18, B64C 3/14

(54) **PROCÉDÉ DE FABRICATION D'UN BORD D'ATTAQUE LIMITANT LES PERTURBATIONS AÉRODYNAMIQUES, BORD D'ATTAQUE OBTENU À PARTIR DUDIT PROCÉDÉ ET PROFIL AÉRODYNAMIQUE D'AÉRONEF COMPRENANT UN TEL BORD D'ATTAQUE**
VERFAHREN ZUR HERSTELLUNG EINER VORDERKANTE, DIE AERODYNAMISCHE STÖRUNGEN BEGRENZT, NACH DIESEM VERFAHREN ERHALTENE VORDERKANTE UND AERODYNAMISCHES FLUGZEUGPROFIL, DAS EINE SOLCHE VORDERKANTE UMFASST
METHOD FOR MANUFACTURING A LEADING EDGE LIMITING THE AERODYNAMIC DISTURBANCES, LEADING EDGE OBTAINED ACCORDING TO SAID METHOD AND AERODYNAMIC PROFILE OF AN AIRCRAFT COMPRISING SUCH A LEADING EDGE

(30) Priorité: 25.11.2019 FR 1913163
(43) Date de publication de la demande: 26.05.2021
(73) Titulaire: Airbus SAS, 31700 Blagnac (FR)
(72) Inventeur: FAROUZ-FOUQUET, Mathias, 31700 BLAGNAC (FR)
(74) Mandataire: Fantin, Laurent

(56) Documents cités:
- WO-A1-2012/132773
- FR-A1- 2 975 929
- GB-A- 532 145
- US-A1- 2015 183 530

## Description

La présente demande se rapporte à un procédé de fabrication d'un bord d'attaque limitant les perturbations aérodynamiques, à un bord d'attaque obtenu à partir dudit procédé ainsi qu'à un profil aérodynamique d'aéronef comprenant au moins un tel bord d'attaque.

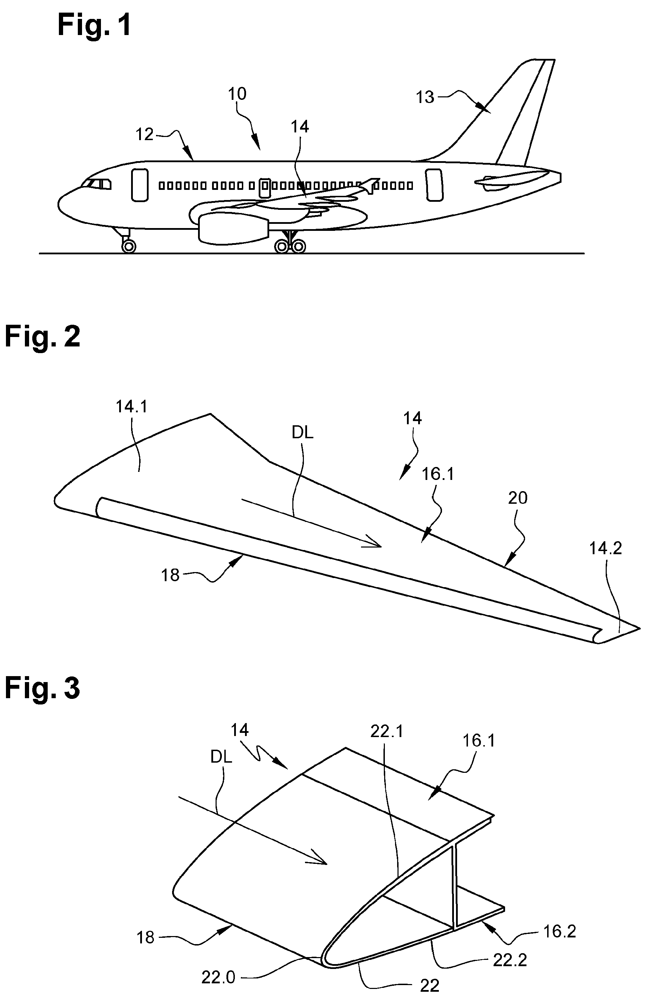

Selon une configuration visible sur la figure 1, un aéronef 10 comprend un fuselage 12, un empennage 13 positionné à l'extrémité arrière du fuselage 12 ainsi que des ailes 14, positionnées de part et d'autre du fuselage, présentant une première extrémité 14.1 reliée au fuselage 12 et une deuxième extrémité 14.2 distante du fuselage 12.

Pour la suite de la description, pour chaque aile 14, une direction longitudinale DL est parallèle à une direction s'étendant entre les première et deuxième extrémités 14.1, 14.2 de l'aile 14. Un plan transversal est un plan perpendiculaire à la direction longitudinale DL.

Les termes « avant » et « arrière » font référence au sens d'écoulement de l'air autour de l'aile 14 en vol, ce dernier s'écoulant de l'avant vers l'arrière.

Selon un mode de réalisation, une aile 14 comprend une surface supérieure 16.1 appelée extrados, une surface inférieure 16.2 appelée intrados, les surfaces supérieure et inférieure 16.1, 16.2 étant reliées à l'avant par un bord d'attaque 18 et à l'arrière par un bord de fuite 20.

Comme illustré sur la figure 3, le bord d'attaque 18 comporte une paroi extérieure 22, avec une section transversale en C, définissant un profil aérodynamique et présentant une lèvre 22.0 prolongée par une partie supérieure 22.1 qui s'étend jusqu'à la surface supérieure 16.1 ainsi que par une partie inférieure 22.2 qui s'étend jusqu'à la surface inférieure 16.2.

Pour conserver un flux laminaire le plus long possible à partir du bord d'attaque18, de part et d'autre de l'aile 14, les surfaces extérieures des parties supérieure et inférieure 22.1, 22.2 du bord d'attaque 18 doivent être positionnées respectivement au même niveau que les surfaces supérieure et inférieure 16.1, 16.2 de l'aile 14.

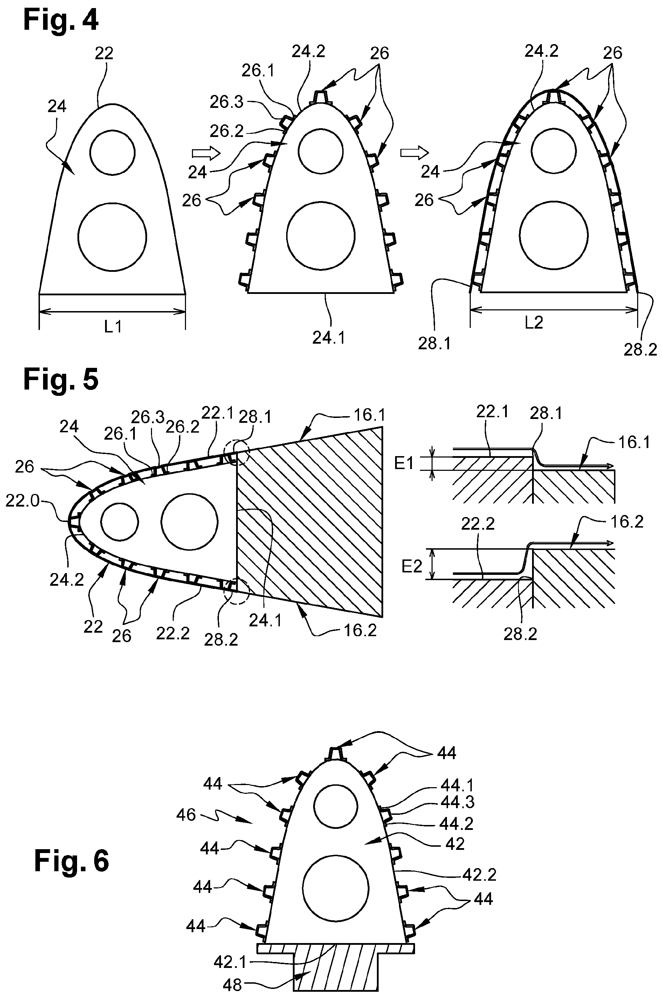

Selon un mode de réalisation visible sur les figures 4 et 5, en plus de la paroi extérieure 22, le bord d'attaque 18 comprend plusieurs renforts transversaux 24 positionnés dans des plans transversaux et espacés selon la direction longitudinale DL. Chaque renfort transversal 24 présente une base 24.1 reliée à la structure de l'aile 14 ainsi qu'un bord périphérique 24.2 présentant un profil en C, comme la paroi extérieure 22.

Le bord d'attaque 18 comprend également plusieurs renforts longitudinaux 26, parallèles à la direction longitudinale DL, répartis le long des bords périphériques 24.2 des renforts transversaux 24, sur lesquels est rapportée et fixée la paroi extérieure 22. Selon une configuration, chaque renfort longitudinal 26 présente une section transversale en oméga comportant deux pattes 26.1, 26.2 positionnées de part et d'autre d'une partie centrale 26.3, les pattes 26.1, 26.2 étant reliées aux renforts transversaux 24, la partie centrale 26.3 étant reliée à la paroi extérieure 22.

Selon un mode opératoire, les renforts transversaux 24 du bord d'attaque 18 sont positionnés sur un outillage selon une configuration donnée, puis les renforts longitudinaux 26 sont fixés sur les renforts transversaux 24 avec des éléments de fixation de type rivets. Enfin, la paroi extérieure 22, initialement plane, est conformée puis reliée aux renforts longitudinaux 26 grâce à des éléments de fixation de type rivets.

Selon ce mode de réalisation, la paroi extérieure 22 comprend un premier bord 28.1 accolé à la surface supérieure 16.1 de l'aile 14 en fonctionnement, ainsi qu'un deuxième bord 28.2 accolé à la surface inférieure 16.2 de l'aile 14 en fonctionnement. En suivant, le bord d'attaque 18 est relié à la structure de l'aile 14. Malgré des intervalles de tolérances réduits pour la fabrication des renforts transversaux et longitudinaux 24, 26 ainsi que pour leur assemblage, il subsiste à l'issue du procédé d'assemblage de l'aile 14 des décalages E1, E2, qui peuvent être importants, entre les surfaces extérieures des parties supérieure et inférieure 22.1, 22.2 du bord d'attaque 18 ainsi que les surfaces supérieure et inférieure 16.1, 16.2 de l'aile 14, comme illustré sur la figure 5.

Ces décalages E1, E2 nuisent aux performances aérodynamiques de l'aile14 en perturbant le flux laminaire s'écoulant de part et d'autre de l'aile 14.

Le document US2015/183530 propose une solution pour fixer des systèmes de dégivrage piézo-électriques sur la surface intérieure d'une paroi courbe formant un bord d'attaque. Dans ce cas, la paroi courbe est positionnée dans un moule puis les systèmes de dégivrage piézo-électriques sont rapportés contre la paroi courbe. Après la fixation des systèmes de dégivrage piézo-électriques, la paroi courbe peut se déformer.

Le document GB532.145 propose un procédé de fabrication d'une aile. Dans ce cas, la paroi extérieure est positionnée dans un moule puis des éléments de structure sont fixés sur la paroi extérieure. Lors de cette étape de fixation, la paroi extérieure épouse la forme des éléments de structure et ne conserve pas la forme du moule.

La présente invention vise à remédier à tout ou partie des inconvénients de l'art antérieur.

A cet effet, l'invention a pour objet un procédé de fabrication d'un bord d'attaque comprenant une structure et au moins une paroi extérieure, le procédé de fabrication comportant une étape de montage de la structure ainsi qu'une étape d'assemblage visant à relier la structure et la paroi extérieure.

Selon l'invention, pendant l'étape d'assemblage, la paroi extérieure est maintenue plaquée par un système magnétique contre une surface de conformation présentant un profil identique à une surface extérieure théorique configurée pour limiter les perturbations aérodynamiques.

Lorsque le bord d'attaque ainsi obtenu est positionné à l'avant d'un profil aérodynamique comme une aile d'avion, ce procédé de fabrication permet de réduire les écarts entre la surface extérieure du bord d'attaque et les surfaces supérieure et inférieure du profil aérodynamique, limitant ainsi que les perturbations aérodynamiques du flux s'écoulant de part et d'autre du profil aérodynamique.

Selon une autre caractéristique, pendant l'étape d'assemblage, la structure et la paroi extérieure sont reliées par collage en utilisant une colle présentant une durée de prise, la paroi extérieure étant maintenue plaquée contre la surface de conformation pendant la durée de prise de la colle.

Selon une autre caractéristique, la colle est configurée pour compenser des différences d'écart entre la structure et la paroi extérieure.

Selon une autre caractéristique, la colle est appliquée sur la structure avant que la structure ne soit rapprochée de la paroi extérieure.

Selon une autre caractéristique, la structure étant positionnée sur un premier outillage selon une première position connue, le procédé de fabrication comprend, préalablement à l'étape d'assemblage, une étape de positionnement du premier outillage supportant la structure par rapport à un deuxième outillage comportant la surface de conformation contre laquelle est maintenue plaquée la paroi extérieure selon une deuxième position connue.

Selon une autre caractéristique, la paroi extérieure est mise en forme selon un profil approximativement en C avant d'être plaquée contre la surface de conformation.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue en perspective d'une aile d'un aéronef,
- La figure 3 est une vue en perspective d'une partie avant d'une aile d'un aéronef,
- La figure 4 est une représentation schématique des différentes étapes d'un procédé de fabrication d'un bord d'attaque illustrant un mode de réalisation de l'art antérieur,
- La figure 5 est une coupe transversale d'une partie avant d'une aile illustrant un mode de réalisation de l'art antérieur,
- La figure 6 est une vue de côté d'une structure d'un bord d'attaque positionnée sur un premier outillage illustrant un mode de réalisation de l'invention,
- La figure 7 est une représentation schématique d'une étape d'insertion d'une paroi extérieure d'un bord d'attaque dans un deuxième outillage illustrant un premier mode de réalisation qui n'est pas selon l'invention,
- La figure 8 est une représentation schématique d'une étape de mise en forme d'une paroi extérieure d'un bord d'attaque dans un deuxième outillage illustrant le premier mode de réalisation qui n'est pas selon l'invention,
- La figure 9 est une représentation schématique d'une étape d'insertion d'une paroi extérieure d'un bord d'attaque dans un deuxième outillage illustrant un deuxième mode de réalisation qui n'est pas selon l'invention,
- La figure 10 est une représentation schématique d'une étape de mise en forme d'une paroi extérieure d'un bord d'attaque dans un deuxième outillage illustrant le deuxième mode de réalisation qui n'est pas selon l'invention,
- La figure 11 est une représentation schématique d'une étape d'insertion de la structure d'un bord d'attaque dans l'outillage de conformation visible sur les figures 7 et 8,
- La figure 12 est une représentation schématique d'une étape d'ajustement du positionnement de la structure du bord d'attaque par rapport à la paroi extérieure après l'étape d'insertion visible sur la figure 11,
- La figure 13 est une représentation schématique d'une étape d'assemblage de la structure et de la paroi extérieure après l'étape d'ajustement du positionnement visible sur la figure 12, et
- La figure 14 est une coupe transversale d'une partie avant d'une aile illustrant un mode de réalisation de l'invention.

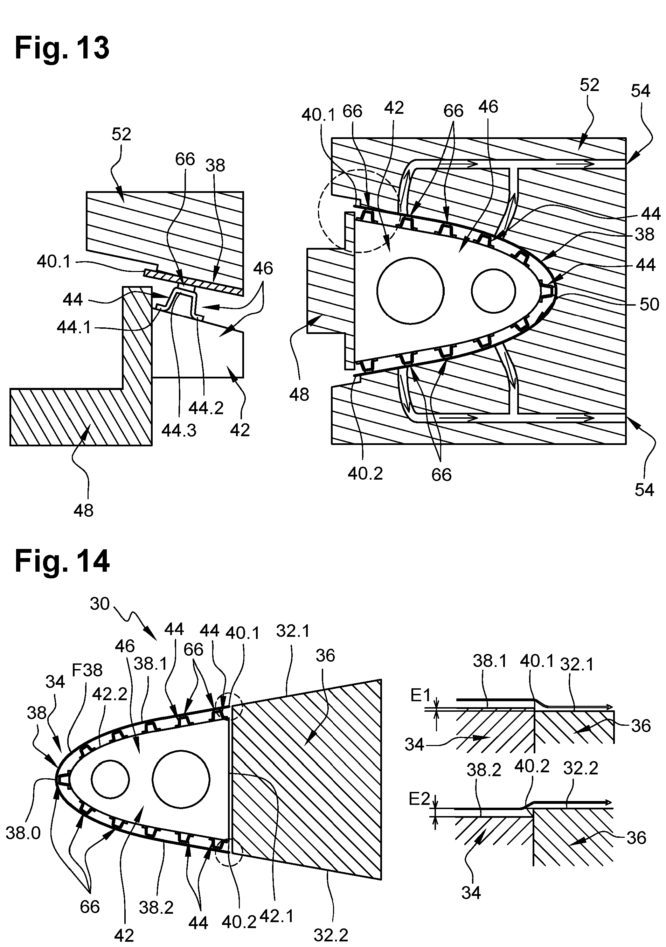

Selon un mode de réalisation visible sur la figure 14, une aile d'avion 30 comprend une surface supérieure 32.1, une surface inférieure 32.2, un bord d'attaque 34 à l'avant et un bord de fuite à l'arrière.

Sur le plan structurel, l'aile d'avion 30 comprend une structure d'aile 36 à laquelle est fixé le bord d'attaque 34.

Bien que décrite appliquée à une aile d'avion, l'invention n'est pas limitée à cette application. Ainsi, l'invention pourrait s'appliquer au bord d'attaque d'un empennage ou de tout autre profil aérodynamique d'un avion présentant une structure à laquelle est relié un bord d'attaque 34.

Selon un mode de réalisation, le bord d'attaque 34 comprend plusieurs tronçons mis bout à bout sur toute la longueur de l'aile 30.

Le bord d'attaque 34 comporte au moins une paroi extérieure 38, avec une section transversale en C, définissant un profil aérodynamique et présentant une lèvre 38.0 prolongée par une partie supérieure 38.1 qui s'étend jusqu'à la surface supérieure 32.1 et par une partie inférieure 38.2 qui s'étend jusqu'à la surface inférieure 32.2.

La paroi extérieure 38 présente un premier bord longitudinal 40.1 adjacent à la surface supérieure 32.1 en fonctionnement et un deuxième bord longitudinal 40.2 adjacent à la surface inférieure 32.2 en fonctionnement.

Selon un mode de réalisation, le bord d'attaque 34 comprend une unique paroi extérieure 38. Selon un autre mode de réalisation, le bord d'attaque 34 comprend plusieurs parois extérieures 38 juxtaposées.

En théorie, la paroi extérieure 38 présente une surface extérieure théorique F38, limitant les perturbations aérodynamiques, telle que le premier bord longitudinal 40.1 présente une surface extérieure au même niveau que la surface supérieure 32.1 de l'aile 30 et que le deuxième bord longitudinal 40.2 présente une surface extérieure au même niveau que la surface inférieure 32.2 de l'aile 30.

Le bord d'attaque 34 comprend également plusieurs renforts transversaux 42 positionnés dans des plans transversaux et espacés selon la direction longitudinale DL. Comme illustré sur la figure 6, chaque renfort transversal 42 présente une base 42.1 reliée à la structure 36 de l'aile 30 ainsi qu'un bord périphérique 42.2 présentant un profil en C, comme la paroi extérieure 38.

Le bord d'attaque 34 comprend également plusieurs renforts longitudinaux 44 approximativement parallèles à la direction longitudinale DL et répartis le long des bords périphériques 42.2 des renforts transversaux 42. Selon une configuration, chaque renfort longitudinal 44 présente une section transversale en oméga comportant deux pattes 44.1, 44.2 positionnées de part et d'autre d'une partie centrale 44.3, les pattes 44.1, 44.2 étant reliées aux renforts transversaux 42 par des éléments de liaison comme des rivets par exemple, la partie centrale 44.3 étant écartée des renforts transversaux 42. Bien entendu, l'invention n'est pas limitée à une section transversale en oméga pour les renforts longitudinaux 44 qui peuvent présenter une section transversale en Z, en C ou autres.

Les renforts transversaux et longitudinaux 42, 44 forment une structure 46 du bord d'attaque 34.

La paroi extérieure 38, les renforts transversaux 42 ainsi que les renforts longitudinaux 44 peuvent être métalliques ou en matériau composite.

Les renforts transversaux et longitudinaux 42, 44 ne sont pas plus détaillés car ils peuvent être identiques à ceux de l'art antérieur.

Le procédé de fabrication du bord d'attaque 34 comprend une étape de positionnement des renforts transversaux 42 sur un premier outillage 48 et une étape de fixation des renforts longitudinaux 44 sur les renforts transversaux 42, comme illustré sur la figure 6.

Ces étapes de positionnement et de fixation ne sont pas plus décrites car elles peuvent être identiques à celles du procédé de fabrication de l'art antérieur.

Plus généralement, le procédé de fabrication du bord d'attaque comprend une étape de montage de la structure 46 du bord d'attaque 34. Selon un mode opératoire, la structure 46 du bord d'attaque 34 est positionnée sur un premier outillage 48 selon une première position connue.

Le procédé de fabrication du bord d'attaque 34 comprend une étape de conformation de la paroi extérieure 38 en la plaquant et en la maintenant plaquée contre une surface de conformation 50 présentant un profil identique à la surface extérieure théorique F38 de la paroi extérieure 38.

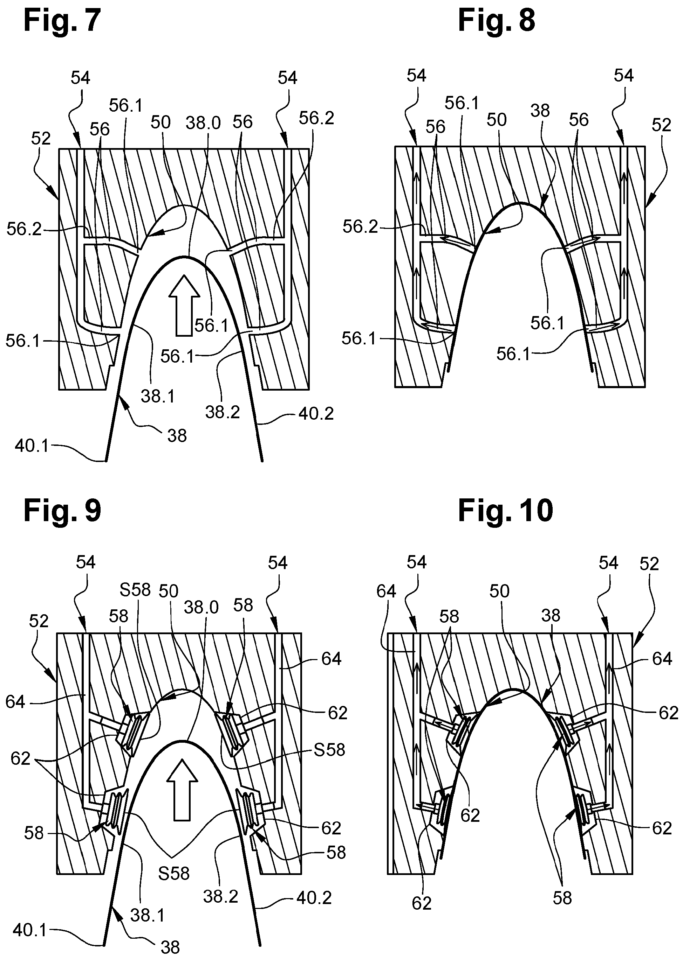

Un deuxième outillage 52 est utilisé pour réaliser cette étape de conformation. Selon une configuration qui n'est pas selon l'invention, ce deuxième outillage 52 comprend la surface de conformation 50 ainsi qu'un système d'aspiration 54 configuré pour occuper un état actif, visible sur les figures 8 et 10, dans lequel le système d'aspiration 54 maintient plaquée et immobile la paroi extérieure 38 contre la surface de conformation 50 ainsi qu'un état inactif, visible sur les figures 7 et 9, dans lequel le système d'aspiration 54 ne maintient plus plaquée et immobile la paroi extérieure 38 contre la surface de conformation 50.

Selon un premier mode de réalisation,qui n'est pas selon l'invention, visible sur les figures 7 et 8, le système d'aspiration 54 comprend une pluralité de canaux 56 présentant chacun une première extrémité 56.1 débouchant au niveau de la surface de conformation 50 et une deuxième extrémité 56.2 reliée à une source d'aspiration (non représentée).

Selon un deuxième mode de réalisation,qui n'est pas selon l'invention, visible sur les figures 9 et 10, le système d'aspiration 54 comprend plusieurs ventouses 58 positionnées dans des logements 62 débouchant au niveau de la surface de conformation 50 et reliées, via des canaux 64, à une source d'aspiration (non représentée). Chaque ventouse 58 présente une surface d'aspiration S58 configurée pour être en contact avec la paroi extérieure 38 à l'état actif et positionnée au niveau de la surface de conformation 50.

Le nombre et le positionnement des premières extrémités 56.1 des canaux 56 ou des ventouses 58 sont déterminés de manière à ce que la paroi extérieure 38 épouse la surface de conformation 50 à l'état actif du système d'aspiration 54.

Le deuxième mode de réalisation avec les ventouses 58 permet d'augmenter la superficie de la paroi extérieure 38 en contact avec le système d'aspiration 54 et ainsi d'obtenir une meilleure conformation de la paroi extérieure 38 qui se rapproche au plus près de la surface extérieure théorique F38.

Selon un mode opératoire, l'étape de conformation de la paroi extérieure 38 comprend une première phase de mise en forme de la paroi extérieure 38 selon un profil approximativement en C, une deuxième phase d'introduction de la paroi extérieure 38 dans le deuxième outillage 52 jusqu'à ce qu'elle vienne en contact avec la surface de conformation 50, comme illustré sur les figures 7 et 9, ainsi qu'une troisième phase d'activation du système d'aspiration 54 de manière à plaquer et maintenir plaquée la paroi extérieure 38 contre la surface de conformation 50, comme illustré sur les figures 8, 10 à 13.

Lors de la deuxième phase d'introduction, le système d'aspiration 54 est à l'état inactif si bien qu'il est possible d'ajuster le positionnement de la paroi extérieure 38 par rapport à la surface de conformation 50. Ainsi, le système d'aspiration 54 reste à l'état inactif tant que la paroi extérieure 38 n'est pas positionnée correctement par rapport au deuxième outillage 52 selon une deuxième position connue. Dès que la paroi extérieure 38 est positionnée par rapport au deuxième outillage 52 selon la deuxième position connue, le système d'aspiration 54 est commuté à l'état actif.

L'étape de conformation n'est pas limitée à ce mode de réalisation. Une autre solution pour plaquer et maintenir plaquée la paroi extérieure 38 contre la surface de conformation 50 est un système magnétique selon l'invention.

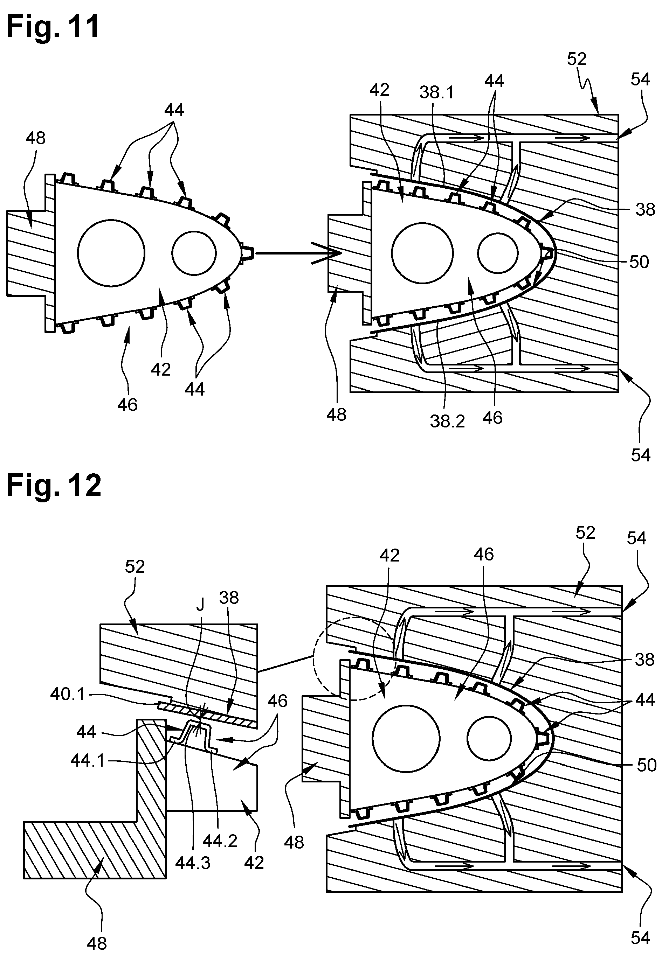

Comme illustré sur les figures 11 à 13, le procédé de fabrication comprend une étape de positionnement de la structure 46 du bord d'attaque 34 par rapport à la paroi extérieure 38, cette dernière étant maintenue plaquée contre la surface de conformation 50, puis une étape d'assemblage de la structure 46 du bord d'attaque 34 et de la paroi extérieure 38, cette dernière étant maintenue plaquée contre la surface de conformation 50.

Après l'étape d'assemblage, le système d'aspiration 54 est désactivé si bien que la paroi extérieure 38 n'est plus maintenue plaquée contre la plaque de conformation 50. Ainsi, le bord d'attaque 34 assemblé est désolidarisé du deuxième outillage 52 et peut être extrait de ce dernier. Enfin, la structure 46 du bord d'attaque 34 est désolidarisée du premier outillage 48.

Lors de l'étape de positionnement de la structure 46 du bord d'attaque 34 par rapport à la paroi extérieure 38, le premier outillage 48 est déplacé en direction du deuxième outillage 52 de sorte que la structure 46 soit positionnée entre les parties supérieure et inférieure 38.1, 38.2 de la paroi extérieure 38, comme illustré sur la figure 11, puis les premier et deuxième outillages 48 et 52 sont positionnés l'un par rapport à l'autre. La structure 46 étant positionnée sur le premier outillage 48 selon une première position connue et la paroi extérieure 38 étant positionnée sur le deuxième outillage 52 selon une deuxième position connue, le positionnement des premier et deuxième outillages 48, 52 l'un par rapport l'autre permet in fine de positionner la paroi extérieure 38 par rapport à la structure 46 du bord d'attaque 34, comme illustré sur la figure 12.

Selon un mode de réalisation, lors de l'étape d'assemblage, la structure 46 du bord d'attaque 34 et la paroi extérieure 38 sont reliées par collage en utilisant une colle 66 présentant une durée de prise à l'issue de laquelle la colle 66 est solidifiée. Selon ce mode de réalisation, la paroi extérieure 38 est maintenue plaquée contre la surface de conformation 50 pendant la durée de prise de la colle 66 tant que la liaison par collage entre la structure 46 du bord d'attaque 34 et la paroi extérieure 38 n'est pas solide.

Selon une configuration, la colle 66 est configurée pour compenser les éventuelles différences d'écart entre la structure 46 du bord d'attaque 34 et la paroi extérieure 38. La structure 46 et plus particulièrement les renforts transversaux et/ou longitudinaux 42, 44 sont dimensionnés de manière à ce qu'il subsiste un jeu J (visible sur la figure 12) pour la colle 66 entre la structure 46 et la paroi extérieure 38.

Selon un premier mode opératoire, la colle 66 est injectée entre la structure 46 et la paroi extérieure 38 lorsque les premier et deuxième outillages 48, 52 sont positionnés rapprochés. Selon un deuxième mode de réalisation, la colle 66 est appliquée sur la structure 46 et plus particulièrement sur la partie centrale 44.3 des renforts longitudinaux 44 avant que la structure 46 du bord d'attaque 34 soit rapprochée de la paroi extérieure 38. Selon ce deuxième mode de réalisation, la colle 66 est configurée pour que sa durée de prise permette le rapprochement de la structure 46 du bord d'attaque et de la paroi extérieure 38 ainsi que leur positionnement l'une par rapport à l'autre.

Après son assemblage, le bord d'attaque 34 est relié à la structure 36 de l'aile 30, en reliant les structures 36, 46 de l'aile 30 et du bord d'attaque 34.

Le procédé de fabrication du bord d'attaque de l'invention permet d'obtenir des écarts E1, E2 faibles ou nuls entre la surface extérieure du premier bord longitudinal 40.1 du bord d'attaque 34 et la surface supérieure 32.1 de l'aile 30 d'une part ainsi qu'entre la surface extérieure du deuxième bord longitudinal 40.2 du bord d'attaque 34 et la surface inférieure 32.2 de l'aile 30 d'autre part.

Ces faibles écarts E1, E2 permettent de limiter les perturbations aérodynamiques et d'accroître la longueur du flux laminaire s'écoulant à partir du bord d'attaque 34 de part et d'autre de l'aile 30.

Le procédé de fabrication de l'invention permet de réduire les coûts d'assemblage en remplaçant les éléments de fixation de type rivets par de la colle. Il permet également de réduire les coûts de fabrication des renforts transversaux et longitudinaux 42, 44 en autorisant des tolérances dimensionnelles plus importantes.

Enfin, le fait que la colle 66 compense les différents écarts entre les différents renforts longitudinaux 44 et la paroi extérieure 38 permet de réduire les contraintes résiduelles dans la structure 36 du bord d'attaque 34 après assemblage.

## Revendications

1. Procédé de fabrication d'un bord d'attaque (34) comprenant une structure (46) et au moins une paroi extérieure (38), le procédé de fabrication comportant une étape de montage de la structure (46) ainsi qu'une étape d'assemblage visant à relier la structure (46) et la paroi extérieure (38), **caractérisé en ce que**, pendant l'étape d'assemblage, la paroi extérieure (38) est maintenue plaquée par un système magnétique contre une surface de conformation (50) présentant un profil identique à une surface extérieure théorique (F38) configurée pour limiter les perturbations aérodynamiques.

2. Procédé de fabrication selon la revendication 1, **caractérisé en ce que**, pendant l'étape d'assemblage, la structure (46) et la paroi extérieure (38) sont reliées par collage en utilisant une colle (66) présentant une durée de prise, la paroi extérieure (38) étant maintenue plaquée contre la surface de conformation (50) pendant la durée de prise de la colle (66).

3. Procédé de fabrication selon la revendication précédente, **caractérisée en ce que** la colle (66) est configurée pour compenser des différences d'écart entre la structure (46) et la paroi extérieure (38).

4. Procédé de fabrication selon la revendication 2 ou 3, **caractérisé en ce que** la colle (66) est appliquée sur la structure (46) avant que la structure (46) ne soit rapprochée de la paroi extérieure (38).

5. Procédé de fabrication selon l'une des revendications 2 à 4, **caractérisé en ce que**, la structure (46) étant positionnée sur un premier outillage (46) selon une première position connue, le procédé de fabrication comprend, préalablement à l'étape d'assemblage, une étape de positionnement du premier outillage (46) supportant la structure (46) par rapport à un deuxième outillage (52) comportant la surface de conformation (50) contre laquelle est maintenue plaquée la paroi extérieure (38) selon une deuxième position connue.

6. Procédé de fabrication selon l'une des revendications précédentes, **caractérisé en ce que** la paroi extérieure (38) est mise en forme selon un profil approximativement en C avant d'être plaquée contre la surface de conformation (50).

## Patentansprüche

1. Herstellungsverfahren für eine Vorderkante (34) mit einer Struktur (46) und wenigstens einer Außenwand (38), wobei das Herstellungsverfahren einen Montageschritt der Struktur (46) sowie einen Zusammenbauschritt aufweist, der darauf abzielt, die Struktur (46) und die Außenwand (38) zu verbinden, **dadurch gekennzeichnet, dass** während des Zusammenbauschritts die Außenwand (38) durch ein Magnetsystem gegen eine Formgebungsfläche (50) gehalten wird, die ein Profil aufweist, das mit einer theoretischen Außenfläche (F38) identisch ist, die so eingerichtet ist, dass sie aerodynamische Störungen begrenzt.

2. Herstellungsverfahren nach Anspruch 1, dadurch gekennzeich-net, dass während des Zusammenbauschritts die Struktur (46) und die Außenwand (38) durch Kleben unter Verwendung eines Klebstoffs (66) mit einer Aushärtungszeit verbunden werden, wobei die Außenwand (38) während der Aushärtungszeit des Klebstoffs (66) gegen die formgebende Oberfläche (50) gehalten wird.

3. Herstellungsverfahren nach dem vorhergehenden Anspruch, **dadurch gekennzeichnet, dass** der Klebstoff (66) so eingerichtet ist, dass er Unterschiede im Abstand zwischen der Struktur (46) und der Außenwand (38) ausgleicht.

4. Herstellungsverfahren nach Anspruch 2 oder 3, **dadurch gekennzeichnet, dass** der Klebstoff (66) auf die Struktur (46) aufgetragen wird, bevor die Struktur (46) an die Außenwand (38) angenähert wird.

5. Herstellungsverfahren nach einem der Ansprüche 2 bis 4, **dadurch gekennzeichnet, dass**, nachdem die Struktur (46) auf einem ersten Werkzeug (46) in einer ersten bekannten Position angeordnet ist, das Herstellungsverfahren vor dem Zusammenbauschritt einen Schritt des Positionierens des ersten Werkzeugs (46), das die Struktur (46) trägt, in Bezug auf ein zweites Werkzeug (52) umfasst, das die Formgebungsfläche (50) aufweist, gegen die die Außenwand (38) in einer zweiten bekannten Position gehalten wird.

6. Herstellungsverfahren nach einem der vorhergehenden Ansprüche, **dadurch gekennzeichnet, dass** die Außenwand (38) zu einem annähernd C-förmigen Profil geformt wird, bevor sie gegen die formgebende Oberfläche (50) gehalten wird.

## Claims

1. Manufacturing method of a leading edge (34) comprising a structure (46) and at least one outer wall (38), the manufacturing method comprising a step of mounting of the structure (46) and an assembly step aiming to link the structure (46) and the outer wall (38), **characterized in that**, during the assembly step, the outer wall (38) is held pressed by a magnetic system against a conformation surface (50) having a profile identical to a theoretical outer surface (F38) configured to limit aerodynamic disturbances.

2. Manufacturing method as claimed in claim 1, wherein, during the assembly step, the structure (46) and the outer wall (38) are linked by bonding using a glue (66) having a curing time, the outer wall (38) being held pressed against the conformation surface (50) for the duration of the curing time of the glue (66).

3. Manufacturing method as claimed in the preceding claim, wherein the glue (66) is configured to compensate for the gap differences between the structure (46) and the outer wall (38).

4. Manufacturing method as claimed in claim 2 or 3, wherein the glue (66) is applied to the structure (46) before the structure (46) is offered up to the outer wall (38).

5. Manufacturing method as claimed in one of claims 2 to 4, wherein, the structure (46) being positioned on a first tooling (48) according to a first known position, the manufacturing method comprises, prior to the assembly step, a step of positioning of the first tooling (48) supporting the structure (46) with respect to a second tooling (52) comprising the conformation surface (50) against which the outer wall (38) is held pressed according to a second known position.

6. Manufacturing method as claimed in one of the preceding claims, wherein the outer wall (38) is formed according to an approximately C-shaped profile before being pressed against the conformation surface (50).
